# EUROPEAN PATENT APPLICATION

(11) **EP 4 514 025 A1**
(43) Date of publication of application: **26.02.2025**
(21) Application number: 24194811.6
(22) Date of filing: 15.08.2024
(51) Int. Cl.: H04W 72/12, H04W 72/54, H04W 72/04, H04W 16/02

(54) **SCHEDULING OF TIME SLOTS IN A FIXED WIRELESS ACCESS NETWORK**

(30) Priority: 25.08.2023 IN 202341057065; 05.12.2023 US 202318529512
(71) Applicant: Cambium Networks Ltd, Ashburton, Devon TQ13 7UP (GB)
(72) Inventor: KING, Nigel, Ashburton, TQ13 7UP (GB); JAHAGIRDAR, Gopal, 560037 Bangalore (IN); SETHURAMAN, Venkat, 560037 Bangalore (IN)
(74) Representative: EIP

(57) **Abstract**

Radio resource is allocated to a subscriber module in a fixed wireless access cellular wireless system comprising an access point (1) and a plurality of subscriber modules (2a - 2m) at static locations, each subscriber module having a directional antenna aligned with the access point, and the area of coverage of the access point having a plurality of sectors (4a, 4b, 4c), each sector being served by a respective radio transceiver of the access point. The same frequency allocation is allocated to each sector, the radio resource for each sector being allocated as a plurality of time slots (t1, t2, t3, t4) each having the same frequency allocation. A suitability of the subscriber module for time slot re-use is determined based on a first criterion. If is suitable for time slot re-use based on the first criterion, time slots are allocated for communication to the subscriber module that are also allocated to an adjacent sector.

## Description

### Technical Field

The present invention relates generally to scheduling of radio resource in a cellular wireless network and particularly, but not exclusively, to dynamic scheduling of time slots in a cellular fixed wireless access Time Domain Multiple Access network.

### Background

Modern wireless communication networks are typically placed under great demands to provide high data capacity within the constraints of the allocated signal frequency spectrum. A fixed wireless access wireless network is a type of cellular wireless system, typically comprising one or more an access points, each being typically mounted on an antenna tower, and a number of subscriber modules installed at fixed locations at customer premises, for example providing wireless Internet access to the premises. The subscriber modules typically have directional antennas, which are aligned on installation to form beams in the direction of the access point, to provide improved signal gain and to reject interference. The area of coverage of an access point may be divided into sectors, for example 3 sectors, each sector operating as a cell, and further access points may have further sectors operating as further cells. The fixed wireless access network may use equipment designed to operate according to a Time Division Multiple Access (TDMA) scheme for allocation of radio resource within a given frequency allocation, in which the given frequency allocation is allocated to each user in turn as a time slot. To avoid interference between users in different sectors of an access point using the same time slot and between users in sectors of adjacent access points, a different frequency allocation may be made to adjacent sectors according to a predetermined frequency re-use pattern.

For example, a network may operate with a re-use factor of 3, in which a given frequency is used by one in every three sectors, which typically avoids the same frequency being used by adjacent sectors, reducing potential interference between sectors in a given time slot. However, only a third of the potential spectrum is used at each sector.

It would be beneficial to improve the efficiency of cellular wireless techniques when applied to a TDMA fixed wireless network.

### Summary

In accordance with a first aspect of the invention there is provided a method of allocating radio resource to a subscriber module in a fixed wireless access cellular wireless system comprising an access point and a plurality of subscriber modules at static locations, each subscriber module having a directional antenna aligned with the access point, and the area of coverage of the access point having a plurality of sectors, each sector being served by a respective radio transceiver of the access point, the method comprising:
providing a frequency allocation to each sector, the frequency allocation for each sector being the same, the radio resource for each sector being allocated as a plurality of time slots, and each time slot having the same frequency allocation;
determining a suitability of the subscriber module for time slot re-use based on a first criterion; and
dependent on a determination that the subscriber module is suitable for time slot re-use, allocating time slots for communication to the subscriber module that are also allocated to a sector adj acent to a sector used for communication with the subscriber module.

This allows efficient allocation of radio resource by using the same frequency resource for all sectors and re-using time slots where suitable according to a first criterion. The first criterion may be, for example, determined by a process comprising processing of measurements of signal strength of reference signals received at the subscriber module which are transmitted by a radio transceiver of a sector in which the subscriber module is camped and at least an adjacent sector. Alternatively or in addition, the first criterion may be determined by a process comprising processing pre-configured data providing classification of a location of the subscriber module, for example according to whether it is likely to receive interference from an adjacent sector, due, for example, to the topology of the terrain. This may be recorded on installation and/or determined from geographical data. If the subscriber module is found to be suitable for time slot re-use according to the first criterion, it has been found that in fixed wireless systems its signal to interference plus noise ratio (SINR) is likely to remain relatively constant, and so it can be scheduled for time slot re-use for an extended period without further testing. This is by contrast to a network having mobile user equipment.

In an example, dependent on a determination that the subscriber module is, on the basis comprising the first criterion, not suitable for time slot re-use on that criterion, a measure of quality of communication may be periodically determined on a communication channel between the access point and subscriber module; dependent on the measure of quality meeting a second criterion, time slots may be allocated for communication to the subscriber module, the time slots being also allocated to an adjacent sector; and dependent on the measure of quality not meeting the second criterion, allocation of time slots for communication to the subscriber module that are allocated to an adjacent sector is not allowed.

Determining whether or not the measure of quality meets the second criterion may be performed more frequently than determining the suitability of the subscriber module for time slot re-use on the basis of the first criterion.

This allows a reduction in signalling overhead in a fixed wireless access network by applying a two-stage decision process. At the first stage, a suitability of a subscriber module for time slot re-use is decided relatively infrequently according to the first criterion. If a subscriber module is a candidate for individual time slot allocation per sector according to the first criterion, that is to say that it is found not suitable for time slot re-use based on the first criterion, its SINR may be expected to change in a shorter timescale, and so a test for a second criterion is applied in this case, more frequently than the test for the first criterion is applied. The test for the second criterion comprises determining a measure of quality of communication on a communication channel between the access point and the subscriber module, for example by a process comprising sending a Channel Quality Indicator (CQI), indicating quality of signals received at the subscriber module, from the subscriber module to the access point. Because the second stage of the test is not applied to the subscriber modules found to be suitable for time slot re-use according to the first criterion, signalling overhead is reduced in comparison to that required in a mobile communication system.

In an example, the measurement signal strength comprises Reference Signal Received Power (RSRP) and the process of determining the first criterion comprises processing measurements of Reference Signal Received Quality (RSRQ) of reference signals received in the sector in which the subscriber module is camped.

This allows an efficient determination of whether the subscriber module meets the first criterion.

In an example, the measure of quality of communication on the communication channel between the subscriber module and the access point is determined on a basis comprising receiving a Channel Quality Indicator (CQI) at the access point.

In an example, the measure of quality of communication on the communication channel between the subscriber module and the access point is determined on a basis comprising block error rate information for data received at the subscriber module, wherein the block error rate information is based on HARQ feedback comprising ACK/NACK messages for downlink data received at the subscriber module.

In an example, the method comprises comparing an adjusted CQI value, which is received CQI value, adjusted on the basis of the block error rate information, to a pre-defined threshold, and dependent on the adjusted CQI value meeting the predefined threshold, allocating radio resource for communication to the subscriber module that is allocated to an adjacent sector.

In an example, the method comprises holding in a database the measure of the quality of communication on the communication channel between subscriber module and the access point for a plurality of subscriber modules camped in a plurality of sectors, and determining a schedule allocating radio resource as a function of time to the subscriber modules camped in more than one sector based on processing of the measures of the quality of communication.

This allows an efficient allocation of radio resource.

In an example, determining the schedule allocating radio resource as a function of time to the subscriber modules camped in more than one sector is based on comparing the measures of the quality of communication to a threshold. The threshold may be determined from a distribution of measures of the quality of the communication for subscriber modules camped in more than one sector.

This allows the threshold to be adapted according to the signal propagation and interference characteristics in the sectors.

In an example, the fixed wireless access cellular wireless system operates as a time division duplex communication system, wherein the suitability of the subscriber module for time slot re-use is determined on the basis comprising the first criterion for the downlink and the time slot re-use is applied to both the downlink and the uplink. In an example, the first criterion may be determined based on the downlink only and not based on the uplink.

This provides an efficient process for allocating timeslots on the uplink.

In accordance with a second aspect of the invention, there is provided scheduler for allocating radio resource to a subscriber module in a fixed wireless access cellular wireless system comprising an access point and a plurality of subscriber modules at static locations, each subscriber module having a directional antenna aligned with the access point, and the area of coverage of the access point having a plurality of sectors, each sector being served by a respective radio transceiver of the access point, the scheduler comprising one or more processors configured cause the scheduler to: allocate radio resource for each sector as a plurality of time slots, each time slot having the same frequency allocation and the frequency allocation for each sector being the same; determine a suitability of the subscriber module for time slot re-use on a basis comprising a first criterion; dependent on a determination that the subscriber module is suitable for time slot re-use, allocate time slots for communication to the subscriber module that are also allocated to a sector adjacent to a sector used for communication with the subscriber module.

In accordance with a third aspect of the invention, there is provided a non-transitory computer-readable medium carrying instructions which, when executed by one or more processors, cause a scheduler comprising the one or more processors to perform the claimed method.

Further features of the invention will be apparent from the following description of preferred embodiments of the invention, which are given by way of example only.

### Brief Description of the Drawings

Figure 1 is a schematic diagram showing an access point and a plurality of subscriber modules, showing areas of coverage of the antenna beams for three sectors and identifying subscriber modules which are suitable for time slot re-use and subscriber modules which are suitable for individual time slot allocation;
Figure 2 is a schematic diagram showing an example of a fractional time slot re-use pattern, in which time allocation t₁ is re-used between sectors for subscriber modules in the central section of each sector, and radio resource is partitioned into time allocations t₂ - t₄ for subscriber modules at the edges of the sectors;
Figure 3 is a schematic diagram showing an example of a fractional time slot re-use pattern, in which time slot partitioning, that is to say no time slot re-use between sectors of the access point, is used for subscriber modules furthest from the access point to avoid interference form the areas of coverage of neighbouring access points;
Figure 4 is a schematic diagram illustrating an example of the allocation of time resource to subscriber modules illustrated in Figure 3 in time allocations t₁, t₂, t₃ t₄.
Figure 5 is a schematic diagram showing a subscriber module and an access point comprising three radio heads connected to a baseband unit;
Figure 6 is a schematic diagram showing a scheduler connected to several access points;
Figure 7 is a flow diagram of a method according to an example;
Figure 8 is a flow diagram of a method according to a further example;
Figure 9 is a flow diagram in an example in which the first criterion is based on geographical location; and
Figure 10 is a flow diagram in an example in which the first criterion is based on measurements of reference signals received from a sector in which the subscriber module is camped and from an adjacent sector.

### Detailed Description

By way of example, embodiments of the invention will now be described in the context of a fixed wireless access system operating using equipment operating according to 3GPP Long Term Evolution (LTE) standards. However, it will be understood that this is by way of example only and that other embodiments may involve other wireless systems and frequencies, and embodiments are not restricted to a specific frequency band of operation or a specific standard and may involve operation in licensed or unlicensed bands. In the context of the fixed wireless access system described, the system comprises what are referred to as "access points" and "subscriber modules". However, embodiments are not limited to applications in which access points and subscriber modules are provided. For example, a peer-to-peer mesh network may be provided. In this case, there may be a plurality of wireless stations which are not differentiated into specific access points and subscriber modules. So, references to "access point" may be interpreted as references to a "first wireless stations", and references to a "subscriber module" or "subscriber modules" may be interpreted as references to a "further wireless station" or "further wires stations" respectively.

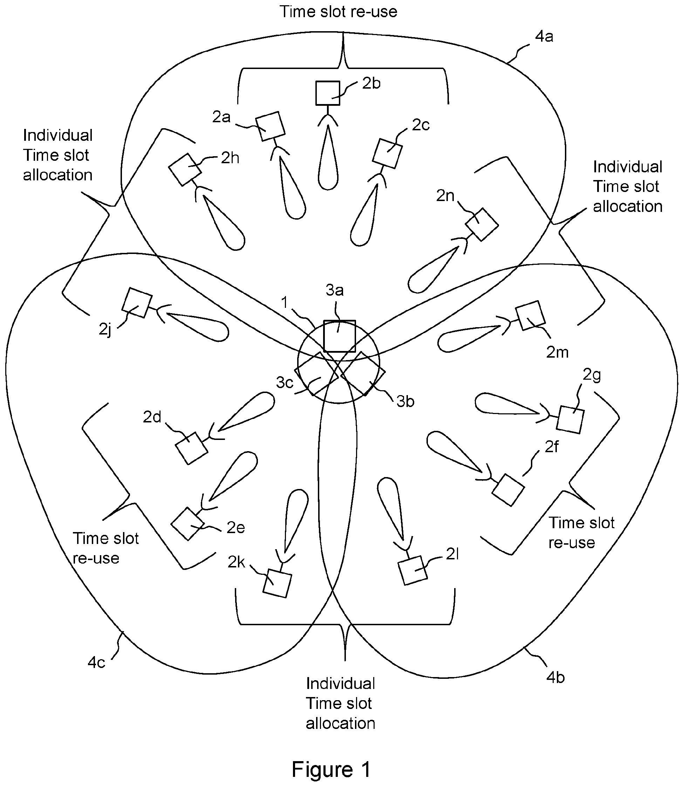

Figure 1 is a schematic diagram showing an example of a fixed wireless access network having an access point 1 in wireless communication with a plurality of subscriber modules 2a-2m. The access point is typically mounted on an antenna tower, and the subscriber modules are typically installed at subscriber premises, for example mounted on a building or on a pole attached to the building. The subscriber modules are therefore typically fixed at static locations. The subscriber modules typically have a directional antenna producing a beam for transmission and reception directed at the access point. The access point in this example has radio transceivers 3a, 3b, 3c which are each attached to an antenna for providing a beam to a respective one of, in this example, three sectors. The area of coverage of each beam 4a, 4b, 4c is shown diagrammatically in Figure 1. It can be seen that there is some overlap between the area of coverage of one sector with the adjacent sector. The radio resource for each sector is allocated as a plurality of time slots, each time slot having the same frequency allocation, as a time division multiple access scheme. If a subscriber module is located in the areas of overlap, then there may be interference between the signals transmitted in the two adjacent sectors, if the two sectors transmit at the same time at the same frequency.

In an example, a time division multiple access scheme may be applied to the downlink, from the access point to the subscriber modules, and may also be applied to the uplink, from the subscriber module to the access point. A time division duplex system may be used, so that uplink and downlink operate alternately in respective uplink and downlink time allocation periods. In an example, the time division multiple access scheme disclosed herein may be used for the downlink, and the suitability of the subscriber module for time slot re-use may be determined for the downlink.

As disclosed herein, radio resource is deployed with a frequency re-use factor of 1, that is to say the same frequency allocation is used for each sector. This provides potentially greater spectral efficiency at the cost of potential interference between sectors of the cellular pattern. According to the disclosure, some of the subscriber modules, typically those closest to the centre of the sector, are provided with radio resource that has time slot re-use between the sectors, that is to say the transmission in each sector, for example on the downlink, may be at the same time. In the example of Figure 1, the subscriber modules 2a-2g are scheduled for time slot re-use. Other subscriber modules, typically those closest to the edge of the sector, are provided with radio resource that has time partitioning between the sectors, also referred to as time slot partitioning, that is to say the transmission in each sector is at a different time. This avoids interference, particularly in the region of coverage overlap between sectors, while allowing efficient spectral usage for the subscriber modules using time slot reuse. In Figure 1, the subscriber modules 2h - 2m are scheduled for individual time slot allocation.

In an example, subscriber modules that are scheduled for time slot re-use on the downlink may also be scheduled for time slot re-use on the uplink. In many fixed wireless access deployments, it is the downlink that is most demanding in terms of susceptibility to interference and demand for capacity, and it may be sufficient to determine the suitability of a subscriber module for timeslot re-use based on measurements or data for the downlink and then schedule the subscriber module for time slot re-use on both the uplink and downlink on this basis. This provides an efficient process for allocating timeslots on the uplink.

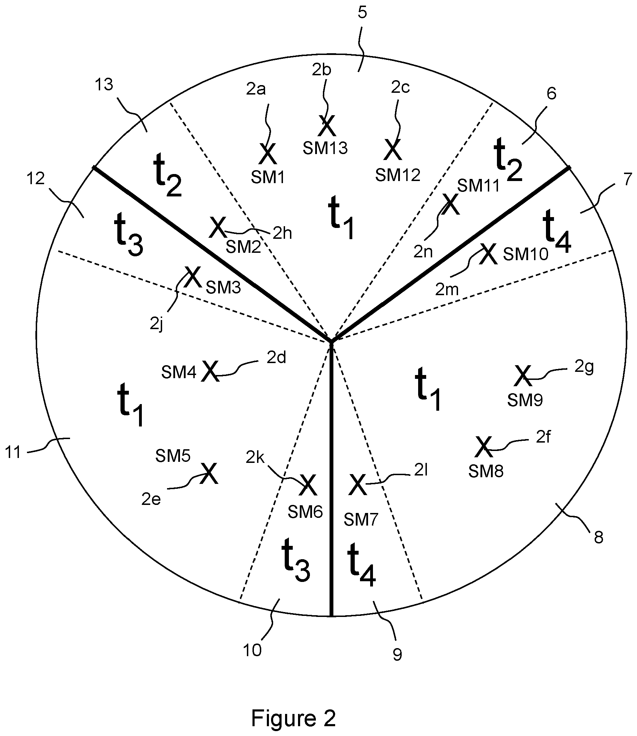

Figure 2 is a schematic diagram showing an example of a fractional time slot re-use pattern, in which time slot allocation t₁ is re-used between sectors for subscriber modules in the central section of each sector, and radio resource is partitioned into time allocations t₂ - t₄ for subscriber modules at the edges of the sectors. The position of the subscriber modules 2a-2m is shown, equivalent to the positions in Figure 1. The diagram is simplified for clarity to use regular geometric shaped for the boundaries between zones, but in reality, the shapes will be irregular due to radio wave propagation conditions and obstacles in the terrain. Although this example shows zones as geometrical areas, the physical location of a subscriber module is not necessarily used to decide upon which zone is appropriate for a subscriber module; this may be decided on the basis of relative levels of received signal and/or signal quality, and will be explained below. Zones 5, 8 and 11 are areas of coverage in which subscriber modules are scheduled to operate in time slots in a time allocation t₁, which is the same for each sector. Subscriber modules in zones 6 and 13 are scheduled to operate in a time allocation t_{2,,} subscriber modules in zones 10 and 12 are scheduled to operate in a time allocation t₃.

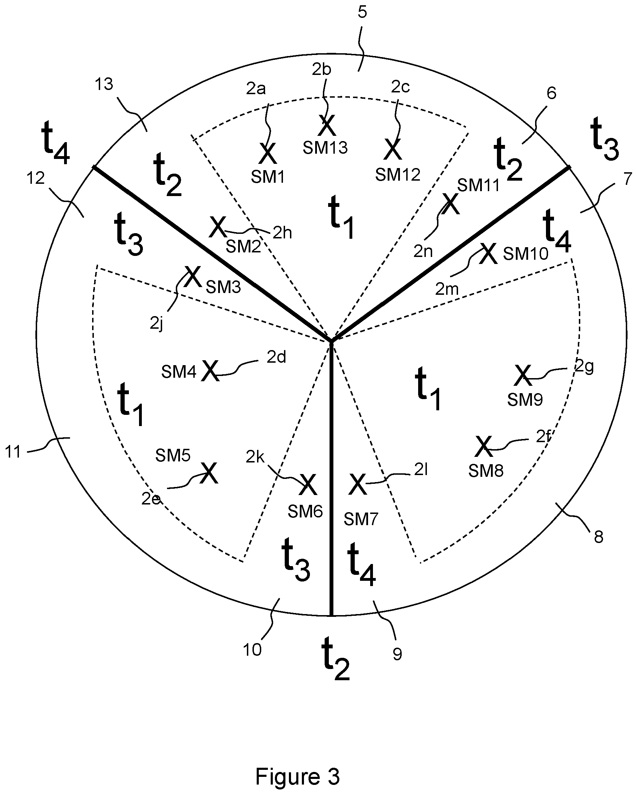

Figure 3 is a schematic diagram showing an example of a fractional time slot re-use pattern, similar to that of Figure 2, showing that individual time slot allocation used for subscriber modules furthest from the access point to avoid interference from the areas of coverage of neighbouring access points.

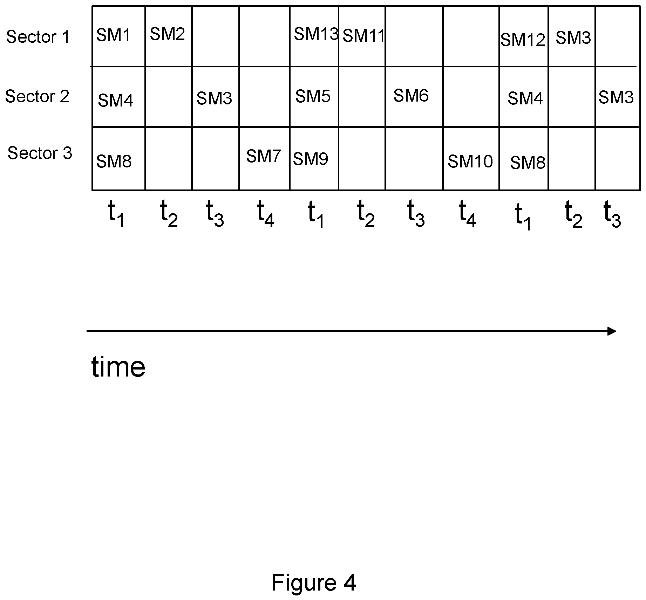

Figure 4 is a schematic diagram illustrating an example of the allocation of time resource to the subscriber modules illustrated in Figure 3 in time allocations t₁, t₂, t₃ t₄. As shown in this example, time allocations t₁, t₂, t₃ t₄ are scheduled in a recurring sequence. During time allocations t₁, one subscriber module in each sector transmits, so that in the first instance of t₁, subscriber modules SM1, SM4 and SM8 transmit,

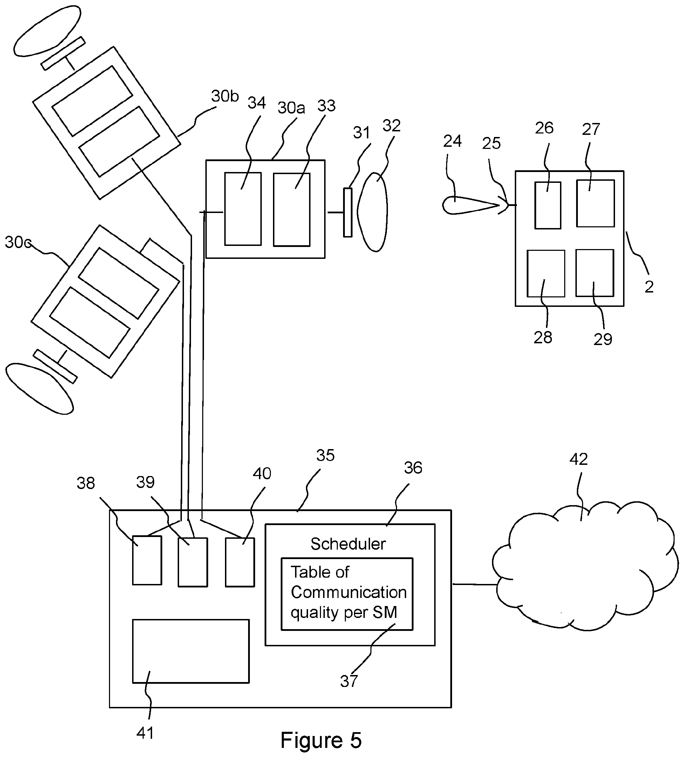

Figure 5 is a schematic diagram showing a subscriber module 2 and an access point comprising three radio heads 30a, 30b, 30c connected to a baseband unit 35. Typically, the radio heads are mounted on an antenna tower, and each is equipped with a sector antenna 31 producing a beam 32 illuminating a respective sector. The radio head may comprise a radio transceiver 33, which typically converts radio signals to and from baseband, and a digital unit 34, which typically sends and receives digitised baseband signals to the baseband unit 35. The baseband unit is typically installed at the base of the tower, and in this example the baseband unit is connected to the radio heads for the three sectors served by the access point at the tower. As shown, the baseband unit may comprise a scheduler, which allocates radio resource as a function of time and frequency for communication between the access point and each subscriber module. The scheduler maintains a table giving communication quality for each subscriber module served by the access point. This will be discussed in more detail below. The baseband unit may be connected to the digital cloud 42 for connection of digital services to respective servers, and for connection to a network management function for the wireless network.

The baseband unit 35 typically has a digital baseband modulator/demodulator 38, 39, 40 connected to each radio head and a controller/processor 41.

Each subscriber module 2 typically has a directional antenna 25, configured to produce a beam for transmit and receive that is narrower than the beam produced by a sector antenna 31. The subscriber module typically comprises a radio transceiver 26, a digital baseband unit 27, a modulator/demodulator 28 and a control processor 29.

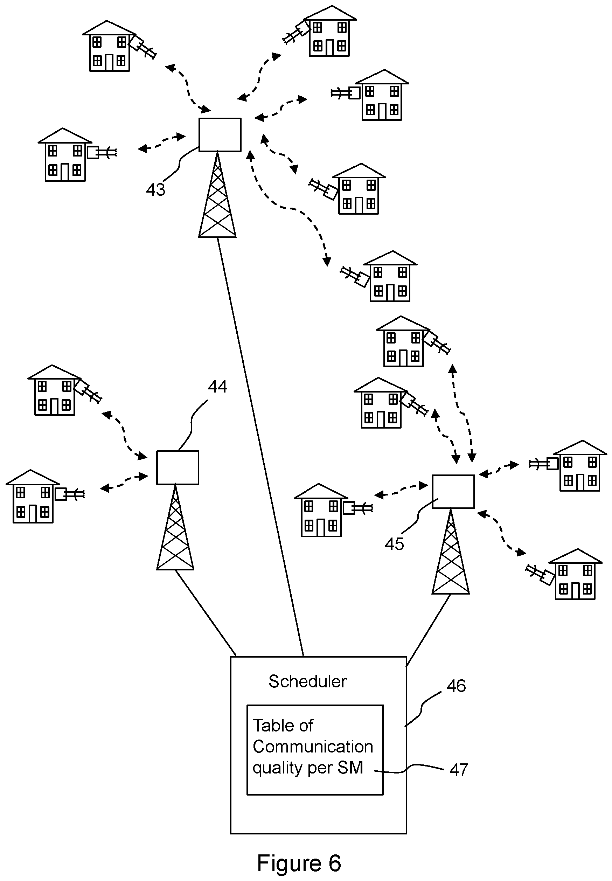

Figure 6 is a schematic diagram showing a scheduler 46 connected to several access points 43, 44, 45. In this example, the scheduler 46 holds a table giving communication quality for each subscriber module served by the sectors of several access points. This allows the scheduler to provide an efficient allocation of radio resource and appropriate modulation and coding schemes for transmission in the radio network.

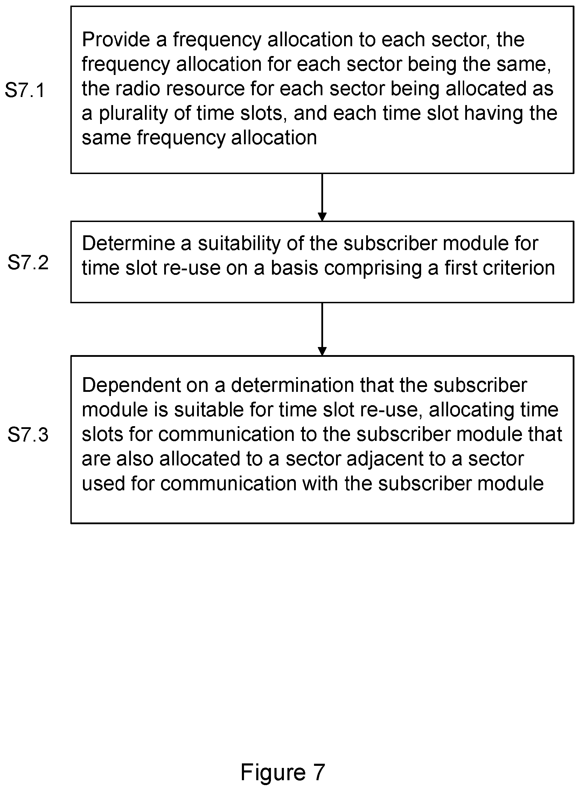

Figure 7 is a flow diagram of a method according to an example according to steps S7.1 to S7.3, providing a method of allocating radio resource to a subscriber module in a fixed wireless access cellular wireless system comprising an access point and a plurality of subscriber modules at static locations, each subscriber module having a directional antenna aligned with the access point, and the area of coverage of the access point having a plurality of sectors, each sector being served by a respective radio transceiver of the access point3a, 3b, 3c.

At step S7.1, a frequency allocation is provided to each sector, the frequency allocation for each sector being the same, the radio resource for each sector being allocated as a plurality of time slots, and each time slot having the same frequency allocation. Accordingly, a time division multiple access scheme is provided with a frequency re-use factor of 1 between sectors. This potentially provides efficient use of radio resource by re-using frequency resource between sectors.

At step S7.2, a suitability of the subscriber module for time slot re-use is determined on a basis comprising a first criterion. The first criterion may be, for example, a geographical location or, as another example, a measure of signal communication quality. The first criterion may be a likelihood that the subscriber module is susceptible to interference.

At step S7.3, dependent on a determination that the subscriber module is suitable for time slot re-use, time slots are allocated for communication to the subscriber module that are also allocated to a sector adjacent to a sector used for communication with the subscriber module. This provides improved capacity.

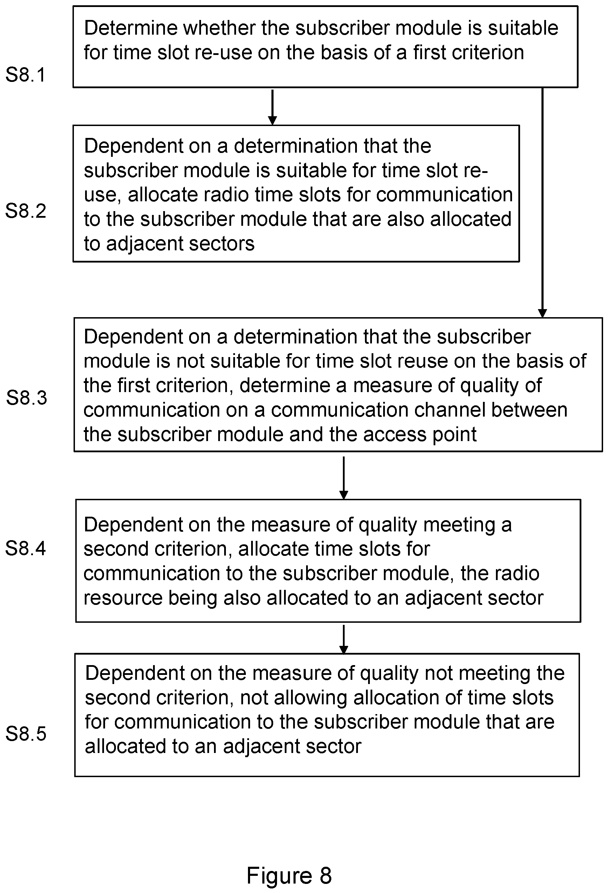

Figure 8 provides a further example of a method according to the disclosure.

At step S8.1, it is determined whether the subscriber module is suitable for time slot re-use on the basis of a first criterion, and at step S8.2, dependent on a determination that the subscriber module is suitable for time slot re-use, radio time slots for communication are allocated to the subscriber module that are also allocated to adjacent sectors.

At step S8.3, dependent on a determination that the subscriber module is not suitable for time slot reuse on the basis of the first criterion, a measure of quality of communication on a communication channel between the subscriber module and the access point is determined. At step S8.4, dependent on the measure of quality meeting a second criterion, time slots are allocated for communication to the subscriber module, the radio resource being also allocated to an adjacent sector. At step S8.5, dependent on the measure of quality not meeting the second criterion, allocation of time slots is not allowed for communication to the subscriber module that are allocated to an adjacent sector.

This process allows a reduction in signalling overhead in a fixed wireless access network in comparison to a mobile network, by applying a two-stage decision process. At the first stage, it is decided relatively infrequently whether a subscriber module is suitable for time slot re-use according to a first criterion. The first criterion may be, for example, determined by a process comprising processing of measurements of signal strength of reference signals received at the subscriber module which are transmitted by a radio transceiver of a sector in which the subscriber module is camped and at least an adjacent sector. Alternatively or in addition, the first criterion may be determined by a process comprising processing pre-configured data providing classification of a location of the subscriber module, for example according to whether it suitable for time slot re-use on the first criterion. This may be recorded on installation and/or determined from geographical data. If the subscriber module is found to be suitable for time slot re-use according to the first criterion, it has been found that in fixed wireless systems its signal to interference plus noise ratio (SINR) is likely to remain relatively constant, and so it can be scheduled for time slot re-use for an extended period without further testing. However, it has been found that if a subscriber module is not suitable for time slot re-use according to the first criterion, its SINR may be expected to change in a shorter timescale, and so a test for a second criterion is applied in this case, more frequently than the test for the first criterion is applied. The test for the second criterion comprises determining a measure of quality of communication on a communication channel between the access point and the subscriber module, for example by a process comprising sending a Channel Quality Indicator (CQI) from the subscriber module to the access point. Because the second stage of the test is not applied to the subscriber modules found to be suitable for time slot re-use according to the first criterion, signalling overhead is reduced in comparison to that required in a mobile communication system.

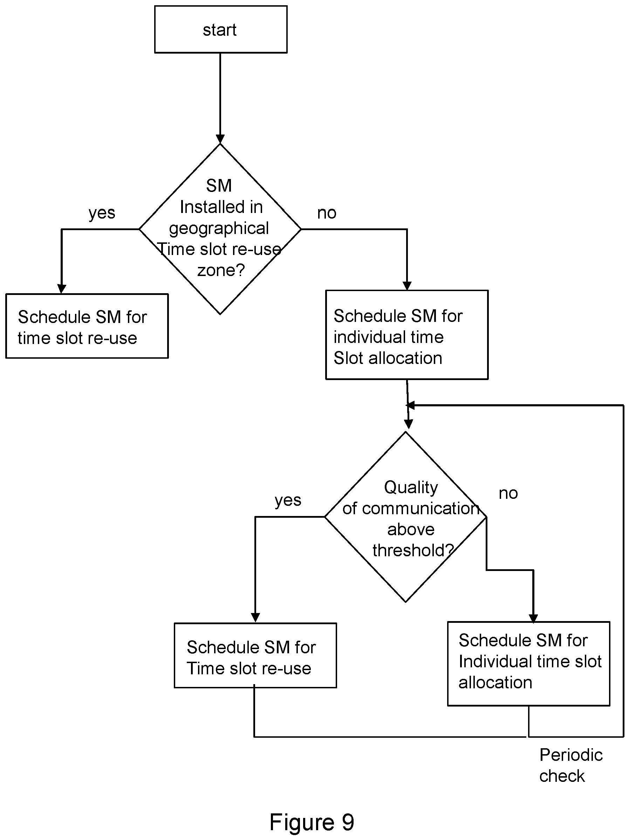

Figure 9 is a flow diagram in an example in which the first criterion is based on geographical location. The geographical location may me entered into a database on installation, and the location may be classified as suitable for time slot re-use of partitioning on the basis of measurements of reference signals from several sectors of the access point on installation, or by propagation simulation, or on the basis of geometrical orientation with the sector antenna.

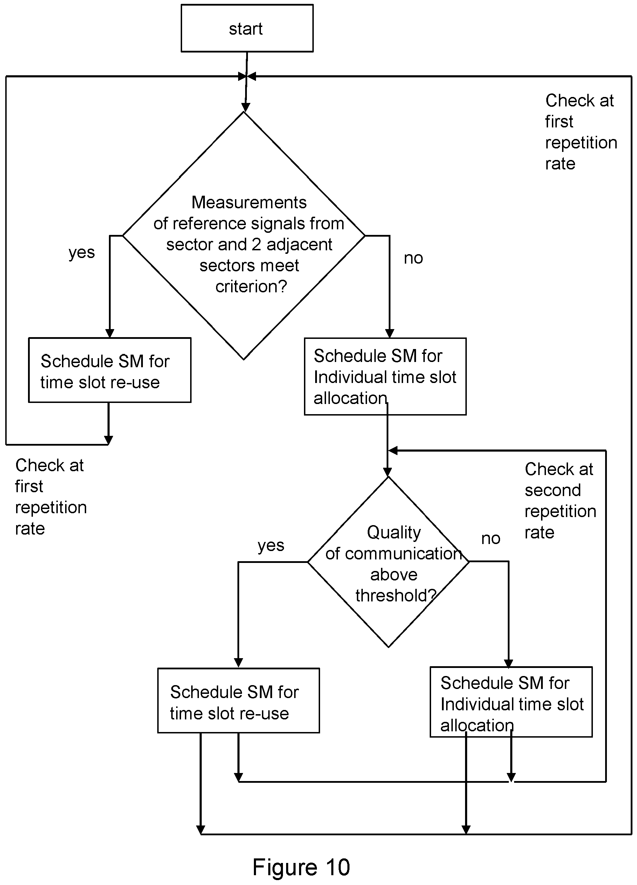

Figure 10 is a flow diagram in an example in which the first criterion is based on measurements of reference signals received from a sector in which the subscriber module is camped and from an adjacent sector. The measurement may comprise a measurement of Reference Signal Received Power (RSRP) and the process of determining the first criterion may also comprise processing measurements of Reference Signal Received Quality (RSRQ) of reference signals received in the sector in which the subscriber module is camped. If the received signal power for the sector in which the subscriber module is camped is close to that of another sector, within a given margin, then the subscriber module may be classified as not being suitable for time slot re-use on the basis of the first criterion, that is to say a candidate for time slot partitioning. Also, if the Reference Signal Received Quality is below a threshold level, the subscriber module may be classified as not being suitable for time slot re-use on the basis of the first criterion, that is to say a candidate for time slot partitioning.

In the examples of Figure 9 and Figure 10. the measure of quality of communication on the communication channel between the access point and the subscriber module is determined on a basis comprising receiving a Channel Quality Indicator (CQI) at the access point, and/or on a basis comprising block error rate information for data received at the subscriber module. For example, the block error rate information may be based on HARQ feedback comprising ACK/NACK messages for downlink data received at the subscriber module. The CQI values may be adjusted on the basis of the block error rate information and compared to a pre-defined threshold. It may be decided whether the subscriber module meets the second criterion on the basis of comparing the adjusted CQI value with a predefined threshold.

The measure of the quality of communication on the communication channel between access point amd the subscriber module may be held in a database for the subscriber modules camped in several sectors, and a schedule allocating radio resource as a function of time to the subscriber modules camped in more than one sector may be determined based on processing of the measures of the quality of communication. The schedule may use the measures to allocate time resources in an overlapping or non-overlapping manner and also to allocate appropriate modulation and coding schemes to provide a fair allocation of resources and to improve spectral efficiency over the network as a whole.

Determining the schedule allocating radio resource as a function of time to the subscriber modules camped in more than one sector may be based on comparing the measures of the quality of communication to a threshold. The threshold may be determined from a distribution of measures of the quality of the communication for subscriber modules camped in more than one sector.

In an example, determination of the schedule may be dynamic on a subframe by subframe basis by the scheduler, for example once per millisecond. The scheduled radio resources may be orthogonal frequency division multiple access resources in an LTE system.

In an example, the measurements of the quality of communication comprises Channel Sate Information, in which the downlink SINR and the CQI (Channel Quality Indicator) are metrices that define the state of downlink channel. The SINR is measured by the subscriber module on the downlink, and CQI is derived using the measured SINR. CQI (indices from 0 to 15) is reported to the access point/base station. A CQI value of 15 indicates best channel while lower values indicate degradation of SINR either due to interference and noise. These parameters are measured and updated periodically by subscriber modules when determining the second criterion, and in an example, CQI reports from all subscriber modules are available to the base station. On the uplink, the access point/base station performs measurements for SINR. Apart from the SINR and CQI metric, in an example the subscriber module also measures RSRP (Reference Signal Power) on the cell-specific Reference signals. In an example, the RSRP information is also reported to the base station by all subscriber modules. Distance-dependent path loss (PL) may be determined by the subscriber modules and access point/base station using RSRP. The difference in Reference Signal Transmit power (available and broadcast by base station) and RSRP determines Path Loss The distance -dependent path loss and SINR (and CQI) typically have linear relationship in the absence of any interference and may form a known baseline for the network. For instance, SINR range -5dB to +25dB corresponds to path loss of 75dB to 135dB.

In a single frequency network, where there is presence of interference in the edge regions, the SINR metric (and thereby CQI) of subscriber modules (SMs) in an edge region is expected to be degraded compared to the baseline case.

In an example, the scheduler is capable to validating the reported CQI from all SMs with real time average Block error rate (BLER) information, experienced by subscriber modules. The BLER information is available to the access point/base station using HARQ feedback (ACK/NACKs) for downlink data received by subscriber modules. A higher percentage of negative acknowledgements (NACK) indicates that the channel is degraded. Based on this real time BLER, the reported CQI from SMs is further adjusted (either upwards or downwards). The adjusted CQI forms the basis for selection of the modulation and coding scheme (MCS). For instance, a subscriber module experiencing higher interference could report lower CQI which is further validated by the BLER based CQI adjustment process. This would result in lower MCS, thereby degrading throughput. In such scenarios, the scheduler would then attempt to provide those subscriber modules with non-overlapping resource blocks so that CQI BLER improves, thereby boosting throughput.

The above embodiments are to be understood as illustrative examples of the invention. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. A method of allocating radio resource to a subscriber module in a fixed wireless access cellular wireless system comprising an access point (1) and a plurality of subscriber modules (2a - 2m) at static locations, each subscriber module having a directional antenna aligned with the access point, and the area of coverage of the access point having a plurality of sectors (4a, 4b, 4c), each sector being served by a respective radio transceiver of the access point, the method comprising:
providing a frequency allocation to each sector, the frequency allocation for each sector being the same, the radio resource for each sector being allocated as a plurality of time slots (11, t2, t3, t4), and each time slot having the same frequency allocation;
determining a suitability of the subscriber module for time slot re-use based on a first criterion; and
dependent on a determination that the subscriber module is suitable for time slot re-use, allocating time slots for communication to the subscriber module that are also allocated to a sector adjacent to a sector used for communication with the subscriber module.

2. A method according to claim 1, comprising:
dependent on a determination that the subscriber module is, based on the first criterion, not suitable for time slot re-use:
periodically determining a measure of quality of communication on a communication channel between the subscriber module and the access point;
dependent on the measure of quality meeting a second criterion, allocating time slots for communication to the subscriber module, the time slots being also allocated to an adjacent sector; and
dependent on the measure of quality not meeting the second criterion, not allowing allocation of time slots for communication to the subscriber module that are allocated to an adjacent sector.

3. A method according to claim 2, wherein determining whether or not the measure of quality meets the second criterion is performed more frequently than determining the suitability of the subscriber module for time slot re-use based on the first criterion.

4. A method according to claim 2 or claim 3, wherein the measure of quality of communication on the communication channel between the subscriber module and the access point is determined on a basis comprising receiving a Channel Quality Indicator (CQI) at the access point.

5. A method according to any one of claims 2 to 4, wherein the measure of quality of communication on the communication channel between the subscriber module and the access point is determined on a basis comprising block error rate information for data received at the subscriber module, wherein the block error rate information is based on HARQ feedback comprising ACK/NACK messages for downlink data received at the subscriber module.

6. A method according to claim 5, comprising:
comparing an adjusted CQI value, which is received CQI value, adjusted on the basis of the block error rate information, to a pre-defined threshold; and
dependent on the adjusted CQI value meeting the predefined threshold, allocating time slots for communication to the subscriber module that are allocated to an adjacent sector.

7. A method according to any one of claims 2 to 6, comprising:
holding in a database the measure of the quality of communication on the communication channel between subscriber module and the access point for a plurality of subscriber modules camped in a plurality of sectors; and
determining a schedule allocating time slots as a function of time to the subscriber modules camped in more than one sector based on processing of the measures of the quality of communication.

8. A method according to claim 7, wherein determining the schedule allocating time slots as a function of time to the subscriber modules camped in more than one sector is based on comparing the measures of the quality of communication to a threshold.

9. A method according to claim 8, comprising determining the threshold from a distribution of measures of the quality of the communication for subscriber modules camped in more than one sector.

10. A method according to any preceding claim, wherein the first criterion is determined by a process comprising processing of measurements of signal strength of reference signals received at the subscriber module which are transmitted by a radio transceiver of a sector in which the subscriber module is camped and at least an adjacent sector.

11. A method according to claim 10, wherein the measurements of signal strength comprise Reference Signal Received Power (RSRP) and wherein the process of determining the first criterion comprises processing measurements of Reference Signal Received Quality (RSRQ) of reference signals received in the sector in which the subscriber module is camped.

12. A method according to any preceding claim, wherein the first criterion is determined by process comprising processing pre-configured data providing classification of a location of the subscriber module, wherein the classification of the location of the subscriber module is according to the suitability of the subscriber module for time slot re-use.

13. A method according to any preceding claim, wherein the fixed wireless access cellular wireless system operates as a time division duplex communication system, wherein the suitability of the subscriber module for time slot re-use is determined based on the first criterion for the downlink and the time slot re-use is applied to both the downlink and the uplink.

14. A scheduler (36, 46) for allocating radio resource to a subscriber module in a fixed wireless access cellular wireless system comprising an access point (1) and a plurality of subscriber modules (2a - 2m) at static locations, each subscriber module having a directional antenna aligned with the access point, and the area of coverage of the access point having a plurality of sectors (4a, 4b, 4c), each sector being served by a respective radio transceiver of the access point, the scheduler comprising one or more processors configured cause the scheduler to:
allocate radio resource for each sector as a plurality of time slots (11, t2, t3, t4), each time slot having the same frequency allocation and the frequency allocation for each sector being the same;
determine a suitability of the subscriber module for time slot re-use based on a first criterion; and
dependent on a determination that the subscriber module is suitable for time slot re-use, allocate time slots for communication to the subscriber module that are also allocated to a sector adjacent to a sector used for communication with the subscriber module.

15. A non-transitory computer-readable medium carrying instructions which, when executed by one or more processors, cause a scheduler comprising the one or more processors to perform the method of any one of claims 1 to 13.
